(19) Europäisches Patentamt / European Patent Office / Office européen des brevets

(11) **EP 1 847 028 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(21) Anmeldenummer: **05818324.5**

(22) Anmeldetag: **12.12.2005**

(51) Int Cl.:
**H04B 1/707** (2006.01)

(86) Internationale Anmeldenummer:
**PCT/EP2005/013302**

(87) Internationale Veröffentlichungsnummer:
**WO 2006/063768 (22.06.2006 Gazette 2006/25)**

(54) **VORRICHTUNG UND VERFAHREN ZUM BESTIMMEN EINES EINTREFFZEITPUNKTES EINER EMPFANGSFOLGE**

DEVICE AND METHOD FOR DETERMINING AN ARRIVAL MOMENT OF A RECEPTION SEQUENCE

DISPOSITIF ET PROCEDE POUR DETERMINER UN INSTANT D'ARRIVEE D'UNE SEQUENCE DE RECEPTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 DE 102004059941**

(43) Veröffentlichungstag der Anmeldung:
**24.10.2007 Patentblatt 2007/43**

(73) Patentinhaber: **Fraunhofer-Gesellschaft zur Förderung der angewandten Forschung e.V.
80686 München (DE)**

(72) Erfinder:
• **HOFMANN, Günter
96123 Litzendorf (DE)**
• **BREILING, Marco
91052 Erlangen (DE)**

(74) Vertreter: **Reitzle, Helmut
Pfenning, Meinig & Partner GbR
Patent- und Rechtsanwälte
Theresienhöhe 13
80339 München (DE)**

(56) Entgegenhaltungen:
EP-A- 0 933 882        EP-A- 1 089 452
WO-A-03/001699        US-A1- 2003 215 035
US-A1- 2004 203 871

**Beschreibung**

Die vorliegende Erfindung befasst sich mit einer Vorrichtung und einem Verfahren zum Bestimmen eines Eintreffzeitpunktes einer Empfangsfolge in einem Empfänger, wie sie insbesondere für digitale Übertragungssysteme einsetzbar sind.

Damit sich ein Empfänger in einem digitalen Übertragungssystem auf ein von einem Sender ausgesendetes digitales Signal aufsynchronisieren kann, strahlt der Sender ein digitales Signal aus, das dem Empfänger bekannt ist. Die Aufgabe des Empfängers liegt darin, den genauen Eintreffzeitpunkt TOA (TOA; TOA = time of arrival) des gesendeten Signals zu bestimmen.

Um den Eintreffzeitpunkt zu bestimmen, wird die Kreuzkorrelierte zwischen dem digitalen Empfangssignal und dem bekannten digitalen Sendesignal berechnet.

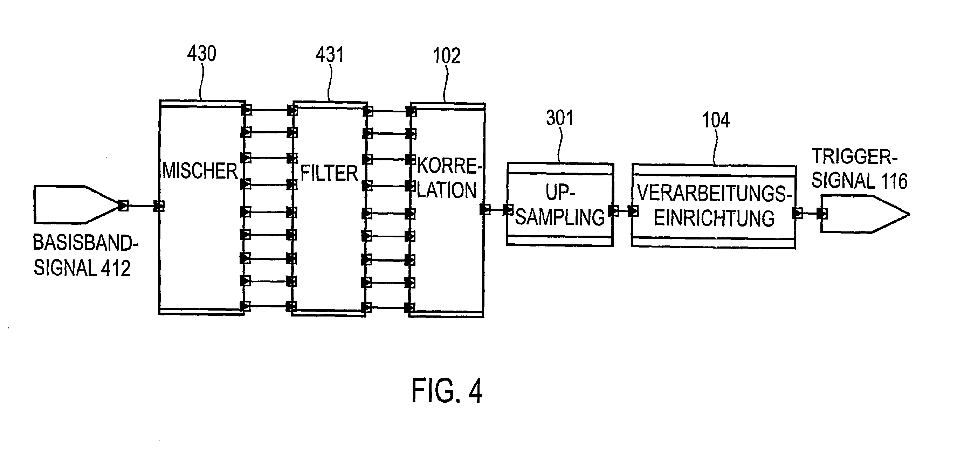

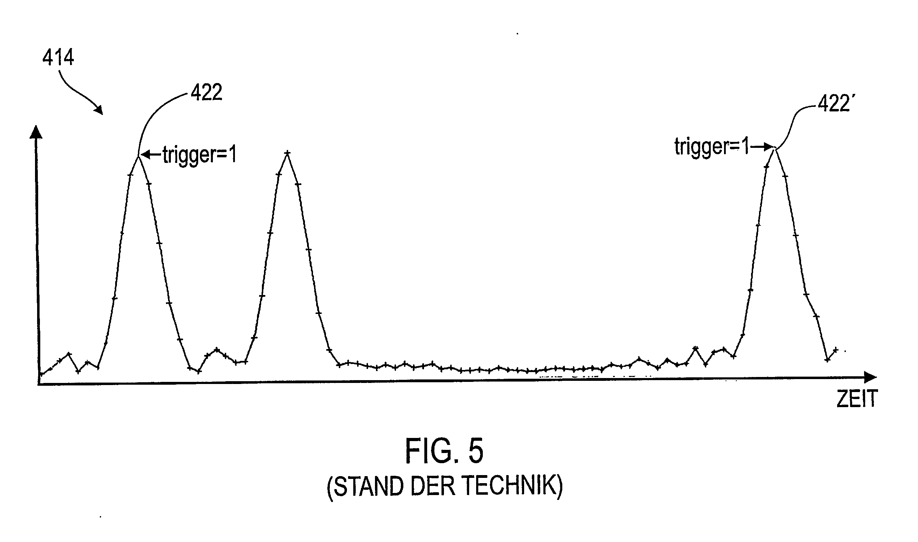

Fig. 5 zeigt eine, über die Zeit aufgetragene Korrelationsfolge 414, die aus einer fortlaufenden Korrelation eines empfangenen Signals mit einem im Empfänger gespeicherten Sendesignal berechnet wurde. Die in Fig. 4 gezeigten Korrelationsspitzen der Korrelationsfolge 414 deuten auf eine Übereinstimmung der gespeicherten Sendefolge mit der Empfangsfolge hin. Um aus der Korrelationsfolge 414 den Eintreffzeitpunkte der Empfangsfolge zu bestimmen, werden die Betragsmaxima der Korrelationsfolge 414 detektiert und der Eintreffzeitpunkt des Empfangssignals aus der Position des Korrelationsbetragsmaximums bestimmt. In Fig. 5 sind zwei Hauptmaxima 422, 422' gezeigt, für die ein Triggersignal, das den Eintreffzeitpunkt der Empfangsfolge anzeigt, gleich 1 gesetzt wird. Ein weiteres Hauptmaximum zwischen den Maxima 422, 422' wird nicht für die Berechnung des Eintreffzeitpunkts berücksichtigt, da dieses Maximum aus einer Mehrwegeausbreitung resultiert.

Soll ein Korrelationsbetragmaximum in einem vorgegebenen Bereich von Korrelationsbetragswerten bzw. in einem vorgegebenen Bereich von Indizes 1 eines Korrelationssignals gesucht werden, so kann das Korrelationsbetragsmaximum bestimmt werden, indem das Maximum aller sich in dem vorgegebenen Bereich befindlichen Korrelationsbeträge bestimmt wird. Sollte gegenüber einem fortlaufenden Signal, d. h. einem Strom von Samples, ein Korrelationsbetragsmaximum gesucht werden, dann muss fortlaufend beurteilt werden, ob der gerade berechnete Korrelationsbetrag ein gültiges, lokales Maximum darstellt oder nicht. Zur Bestimmung eines solchen lokalen Maximums kann ein festgelegter Schwellwert genützt werden, zusammen mit der Regel, dass ein Korrelationsbetragsmaximum dann vorliegt, wenn ein zu beurteilender Korrelationsbetrag den Schwellwert überschreitet.

Eine Bestimmung des Eintreffzeitpunkts abhängig von dem Hauptmaximumswert einer Korrelationsfolge ist unflexibel und ungenau, da keine Möglichkeit einer Anpassung an einen sich ändernden Übertragungskanal gegeben ist. Ferner ist das Hauptmaximum einer Korrelationsfolge empfindlich gegenüber Mehrwegeausbreitung. Das bedeutet, dass die nachfolgenden Pfade das Maximum stark beeinflussen, seine Position verschieben und somit die Eintreffzeit verfälschen. Ferner ist das Hauptmaximum anfällig gegen Rauschen. Dadurch kann der Eintreffzeitpunkt der Empfangsfolge aus dem Korrelationsbetragsmaximum nur sehr ungenau bestimmt werden bzw. es kann zu einer irrtümlichen Bestimmung des Eintreffzeitpunkts kommen, wenn fälschlicherweise ein Korrelationsbetragsmaximum erkannt wurde. Als Folge einer fehlerhaften Bestimmung des Eintreffzeitpunkts kann eine Aufsynchronisation zwischen Sender und Empfänger fehlschlagen bzw. es kann zu einer fehlerhaften Datenübertragung kommen, wenn die Synchronisation nur ungenau durchgeführt werden kann, weil der exakte Eintreffzeitpunkt der Empfangsfolge nicht bestimmt werden kann.

Gemäß EP 1 089 452 A1 wird ein Eintreffzeitpunkt aus dem Hauptmaximum einer Kreuzkorrelationsfunktion bestimmt. Dazu werden drei Abtastwerte der Korrelationsfolge ausgewählt, die möglichst nah an der tatsächlichen Position des Korrelationsmaximums liegen. Aus diesen drei Werten wird die tatsächliche Position des Korrelationsmaximums als Bruchteil eines Abtastwerts geschätzt.

EP 0 933 882 A2 beschreibt eine Schaltung zur Erkennung einer Spitze einer diskreten Signalform. Dazu wird über die zeitdiskreten Werte eine Annäherungsfunktion gebildet, aus der das Maximum gebildet werden kann. Das Maximum wird wiederum ermittelt, indem ein Nulldurchgang der Ableitung der Annäherungsfunktion gebildet wird.

Gemäß US 2003/0215035 A1 wird ein Korrelationspuls, also ein Hauptmaximum einer Korrelationsfolge verwendet, um den Eintreffzeitpunkt eines Signals zu bestimmen. Um Effekte der Mehrwegeausbreitung zu kompensieren wird zuerst ein Typ und eine Stärke des Mehrwegesignals bestimmt, so dass dann ein Korrekturfaktor zur Position des Hauptmaximums hinzugefügt werden kann.

Gemäß US 2004/0203871 A1 wird mittels einer Vorabschätzung herausgefunden, ob ein Korrelationswert geeignet ist, um einen Eintreffzeitpunkt zu ermitteln. Zur Abschätzung kann dabei die Größe des Gebietes der Korrelationskurve dienen, das durch den maximalen Korrelationswert und den beiden unmittelbar angrenzenden Korrelationswerten begrenzt wird.

WO 03/001699 A1 beschreibt eine Möglichkeit, Fehler bei der Berechnung der Eintreffzeit zu reduzieren, indem die Breite eines Korrelationspulses berechnet wird und daraus ein Korrekturfaktor berechnet wird, der zur Reduzierung der Fehler der Eintreffzeitpunkte verwendet werden kann.

Es ist die Aufgabe der vorliegenden Erfindung, eine Vorrichtung, ein Verfahren und ein Computerprogramm zum Bestimmen eines Eintreffzeitpunkts einer Empfangsfolge zu schaffen, die eine sichere Bestimmung des Eintreffzeitpunkts ermöglichen.

Diese Aufgabe wird durch eine Vorrichtung zum Bestimmen eines Eintreffzeitpunkts gemäß Anspruch 1, ein Verfahren zum Bestimmen eines Eintreffzeitpunkts einer Empfangsfolge gemäß Anspruch 10 und ein Computerprogramm zum Bestimmen eines Eintreffzeitpunkts einer Empfangsfolge gemäß Anspruch 11 gelöst.

Die vorliegende Erfindung schafft eine Vorrichtung zum Bestimmen eines Eintreffzeitpunkts einer Empfangsfolge in einem Empfänger mit folgenden Merkmalen:

einer Korrelationseinrichtung, die ausgebildet ist, um eine Korrelationsfolge aus einer Korrelation der Empfangsfolge mit einer Sendefolge zu ermitteln, wobei die Korrelationsfolge eine Spitzenform mit einem Hauptmaximum und wenigstens einem lokalen Nebenmaximum aufweist; und

einer Verarbeitungseinrichtung, die ausgebildet ist, um einen Punkt der Korrelationsfolge zu ermitteln, der in einem Intervall liegt, das auf der einen Seite durch das lokale Nebenmaximum und auf der anderen Seite durch die Spitzenform begrenzt ist, und ausgebildet ist, um den Eintreffzeitpunkt in Abhängig von dem Punkt zu bestimmen.

Die vorliegende Erfindung schafft ferner ein Verfahren zum Bestimmen eines Eintreffzeitpunkts einer Empfangsfolge in einem Empfänger, das folgende Schritte umfasst:

Ermitteln einer Korrelationsfolge aus einer Korrelation der Empfangsfolge mit einer Sendefolge, wobei die Korrelationsfolge eine Spitzenform mit einem Hauptmaximum und wenigstens einem lokalen Nebenmaximum aufweist; und

Ermitteln eines Punktes der Korrelationsfolge, der in einem Intervall liegt, das auf der einen Seite durch das lokale Nebenmaximum und auf der anderen Seite durch die Spitzenform begrenzt ist, und Bestimmen des Eintreffzeitpunkts in Abhängig von dem Punkt.

Der vorliegenden Erfindung liegt die Erkenntnis zugrunde, dass es vorteilhaft ist, die Bestimmung des Eintreffzeitpunkts einer Empfangsfolge in einem Empfänger nicht basierend auf dem Hauptmaximum der Korrelationsfolge, sondern basierend auf einem Punkt, der sich innerhalb eines Intervalls um das Hauptmaximum herum befindet, durchzuführen. Die Empfangsfolge kann ein Teil eines von dem Empfänger empfangenen Signals sein. Der Eintreffzeitpunkt gibt den Zeitpunkt an, zu dem die Empfangsfolge in dem Empfänger eingetroffen ist bzw. von dem Empfänger detektiert wurde. Der Eintreffzeitpunkt kann beispielsweise eine absolute Zeitinformation oder auch ein Triggerzeitpunkt sein. Bei dem Punkt kann es sich um einen Wert der Korrelationsfolge oder um einen Punkt handeln, der zwischen zwei Korrelationswerten der Korrelationsfolge angeordnet ist.

Die Verwendung eines Punktes innerhalb eines Intervalls um das Hauptmaximum ist vorteilhaft, da solche Punkte weniger empfindlich gegenüber Mehrwegeausbreitung sind, als es das Hauptmaximum selber ist. Das bedeutet, dass die nachfolgenden Pfade solche Punkte weniger beeinflussen als das Maximum. Ebenso sind Punkte um das Hauptmaximum herum robuster gegenüber dem Rauschen. Dies bedeutet, dass der Eintreffzeitpunkt unter Verwendung eines Punkts in einem Intervall um das Hauptmaximum herum exakter bestimmt werden kann als unter Verwendung des Hauptmaximums selber.

Gemäß einem Ausführungsbeispiel ist das Intervall zeitlich vor dem Hauptmaximum angeordnet. Das bedeutet, dass nur Punkte zur Bestimmung des Eintreffzeitpunkts herangezogen werden, die Korrelationswerten entsprechen, die zeitlich vor dem Korrelationswert ermittelt wurden, der dem Hauptmaximum zugeordnet ist. Dies hat den Vorteil, dass der Eintreffzeitpunkt zuverlässiger ermittelt werden kann, da sich der Einfluss der Mehrwegeausbreitung vor dem Hauptmaximum schwächer auswirkt als auf das Hauptmaximum selber oder auf nachfolgende Korrelationswerte.

Gemäß einem Ausführungsbeispiel ist der Punkt ein Wendepunkt, ein Ort maximaler Steigung auf der Korrelationswertefolge oder ein Extremwert (z. B. Maximum) der Korrelationswertefolge. Zur Ermittlung des Punktes kann die erste und zweite Ableitung der Korrelationsfolge ermittelt werden, wobei der Punkt ein Extremwert oder Nulldurchgang der Ableitung sein kann.

Gemäß einem Ausführungsbeispiel wird der Punkt erst gesucht, nachdem ein Hauptmaximum bestimmt wurde. Dies hat den Vorteil, dass die Schritte zur Berechnung des Punktes nur dann durchgeführt werden, wenn tatsächlich ein Eintreffzeitpunkt zu bestimmen ist. Durch das Vorhandensein eines Hauptmaximums ist zumistet die Wahrscheinlichkeit hoch, dass die gesuchte Empfangsfolge empfangen wurde. An dieser Stelle sei darauf hingewiesen, dass es mehrere Wendepunkte geben kann, die nicht alle unbedingt gültig sein müssen.

Gemäß einem weiteren Ausführungsbeispiel werden potentielle Punkte, die die Kriterien zur Bestimmung des Eintreffzeitpunktes erfüllen, fortlaufend aus der Korrelationsfolge ermittelt. Als Folge der Bestimmung eines Korrelationsmaximums wird der zuletzt ermittelte Punkt als der Punkt bestimmt, bezüglich des der Eintreffzeitpunkt bestimmt wird. Eine fortlaufende Bestimmung möglicher Punkt hat den Vorteil, dass der Eintreffzeitpunkt sehr schnell bestimmt werden kann, da der Punkt bereits ermittelt wurde, bevor das Hauptmaximum bestimmt wird.

Gemäß einem weiteren Ausführungsbeispiel wird die Korrelationsfolge interpoliert, um den Eintreffzeitpunkt hochgenau bestimmen zu können.

Gemäß einem weiteren Ausführungsbeispiel wird der Eintreffzeitpunkt in Abhängigkeit von dem Hauptmaximum der Korrelationsfolge bestimmt, wenn es nicht möglich ist, den potentiellen Punkt zu bestimmen. Dies hat den Vorteil, dass zumindest ein, wenn auch ungenauer Eintreffzeitpunkt festgelegt werden kann, mit dem vorläufig weitergearbeitet werden kann.

Bevorzugte Ausführungsbeispiele der vorliegenden Erfindung werden nachfolgend Bezug nehmend auf die beiliegenden Zeichnungen näher erläutert. Es zeigen:

Fig. 1      eine schematische Darstellung eines Vorrichtung zum Bestimmen eines Eintreffzeitpunkts einer Empfangsfolge gemäß einem Ausführungsbeispiel der vorliegenden Erfindung;

Fig. 2      eine graphische Darstellung einer Korrelation gemäß einem Ausführungsbeispiel der vorliegenden Erfindung;

Fig. 3a      eine schematische Darstellung einer Interpolationseinrichtung gemäß einem Ausführungsbeispiel der vorliegenden Erfindung;

Fig. 3b      eine Übersicht der in Fig. 3a verwendeten Filterkoeffizienten;

Fig. 4      eine schematische Darstellung eines Empfängers mit einer Vorrichtung zum Bestimmen eines Eintreffzeitpunkts gemäß einem Ausführungsbeispiel der vorliegenden Erfindung; und

Fig. 5      eine graphische Darstellung einer Korrelationsfolge gemäß dem Stand der Technik.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

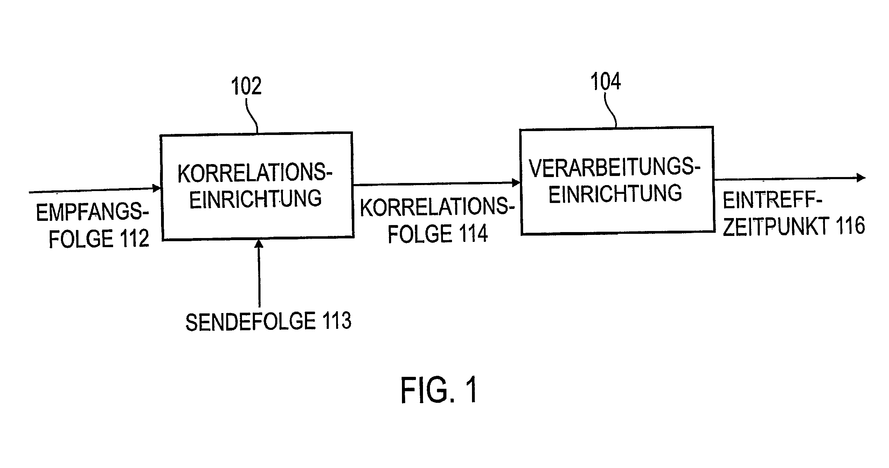

Fig. 1 zeigt eine schematische Darstellung einer Vorrichtung zum Bestimmen eines Eintreffzeitpunkts einer Empfangsfolge gemäß einem Ausführungsbeispiel der vorliegenden Erfindung. Die Vorrichtung weist eine Korrelationseinrichtung 102 und eine Verarbeitungseinrichtung 104 auf. Die Korrelationseinrichtung 102 ist ausgebildet, um eine Empfangsfolge 112 zu empfangen. Ferner ist die Korrelationseinrichtung 102 ausgebildet, um eine Sendefolge 113 zu empfangen bzw. weist eine Speichereinrichtung (nicht gezeigt in den Figuren) auf, in der die Sendefolge 113 enthalten ist. Die Korrelationseinrichtung 102 ist ausgebildet, um eine Korrelation zwischen der Empfangsfolge 112 und der Sendefolge 113 durchzuführen, und die sich aus der Korrelation der Empfangsfolge 112 und der Sendefolge 113 ergebenden Korrelationsfolge 114, an die Verarbeitungseinrichtung 104 bereitzustellen. Die Verarbeitungseinrichtung 104 ist ausgebildet, um einen Punkt innerhalb eines an ein Hauptmaximum der Korrelationsfolge 114 angrenzendes Intervall zu ermitteln und ausgehend von dem Punkt einen Eintreffzeitpunkt 116 zu berechnen und bereitzustellen, der das Eintreffen der Empfangsfolge 112 definiert. Das Hauptmaximum ist dabei nicht Teil des Intervalls, bzw. es wird der Korrelationswert, der das Hauptmaximum darstellt, bei der Ermittlung des Punktes ausgenommen.

Gemäß diesem Ausführungsbeispiel ist die Vorrichtung zum Bestimmen eines Eintreffzeitpunkts einer Empfangsfolge in einem Empfänger eines digitalen Übertragungssystems angeordnet. Die Empfangsfolge 112 kann zum Synchronisieren des Senders mit dem Empfänger genutzt werden. Dazu ist der Vorrichtung die Sendefolge 113 bekannt, die von dem Sender ausgesendet wird und als Empfangsfolge 112 von dem Empfänger empfangen wird. Bei einer perfekten Übertragung mit Ausnahme eines Trägerfrequenzversatzes zwischen Sender und Empfänger sowie einem konstanten Kanalkoeffizienten a und einer Verzögerung L empfängt der Empfänger das komplexe Basisbandsignal

$$y[k + L] = \alpha \cdot x[k] \cdot e^{j(2\pi \Delta F k + \phi_0)}$$

wenn der Sender die Sendefolge x[k] aussendet. Die Korrelationseinrichtung 102 ist ausgebildet, um das Empfangssignal y[k] mit dem im Sender und Empfänger gespeicherten Original-Signal x[k] zu korrelieren. Die Kreuzkorrelation zwischen Empfangssignal y[k] und Korrelationssequenz x[k] ist definiert als

$$r_{yx}[l] = \sum_{k=0}^{K-1} y[k + l] \cdot x^*[k].$$

Der Index l bezeichnet dabei, um wie viel y[k] in der Korrelationsberechnung verschoben werden soll. Wenn y[k] so verschoben wird, dass sich y[k+L] und x[k] optimal decken, so erhalten wird als Korrelationswert

$$r_{yx}[L] = \sum_{k=0}^{K-1} \alpha \cdot |x[k]|^2 e^{j(2\pi \Delta F k + \phi_0)}.$$

In diesem Fall hat die Korrelationsfolge 114 ein Maximum, für das $r_{yx}[L]$ maximal ist. In Fig. 1 entspricht die Empfangsfolge 112 dem Signal y, die Sendefolge 113 dem Signal x und die Korrelationsfolge 114 dem Signal r.

Die Verarbeitungseinrichtung 104 ist ausgebildet, um aus dem Verlauf der Werte der Korrelationsfolge 114 das Eintreffen der Empfangsfolge 112 zu ermitteln. Dazu ist die Verarbeitungseinrichtung 104 ausgebildet, um ein Hauptmaximum der Korrelationsfolge 114 zu bestimmen. Dies kann mit einer Einrichtung zum Bestimmen des Hauptmaximums (nicht gezeigt in den Figuren) erfolgen, die das Korrelationsmaximum durch eine Schwellwertentscheidung bestimmt. Das heißt, ein Hauptmaximum liegt dann vor, wenn ein Wert der Korrelationsfolge 114 einen bestimmten Schwellwert überschreitet.

Abhängig von dem Übertragungssystem kann die Einrichtung zum Erkennen des Hauptmaximums ausgebildet sein, um das Hauptmaximum auch unter dem Einfluss von Störeinflüssen zu erkennen. Gemäß diesem Ausführungsbeispiel wird auf der Korrelationsbetragssequenz 114 ein Wendepunkt vor dem Hauptmaximum in einem betrachteten Fenster gesucht. Das heißt, es wird zuerst das Hauptmaximum bestimmt und dann wird auf der Korrelationsbetragskurve 114 zeitlich zurückgeschritten, bis der erste Wendepunkt gefunden wird. Der Wendepunkt wird als der Punkt angesehen, basierend auf dem der Eintreffzeitpunkt bestimmt wird. Für die Suche des Wendepunkts wird die erste und die zweite Ableitung der Korrelationsbetragsfunktion 114 benötigt. Da die Ableitungen der Korrelationsbetragsfunktion 114 nur abgetastet vorliegt, können die Ableitungen nur näherungsweise und ebenfalls nur abgetastet berechnet werden. Die Lage des Wendepunkts ist also zunächst nur im Über-Abtastraster bzw. im Abtastraster detektierbar. Zum Durchführen der Ableitung kann die Verarbeitungseinrichtung 104 eine Einrichtung zum Bilden der ersten und der zweiten Ableitung der Korrelationsfolge 114 aufweisen.

Nach der Ermittlung des, vor dem Hauptmaximum gelegenen Wendepunkts, wird von der Verarbeitungseinrichtung 104 ein Triggersignal bereitgestellt. Das Triggersignal gibt den Eintreffzeitpunkt 116 der Empfangsfolge 112 bekannt. Bei dem Eintreffzeitpunkt 116 kann es sich um eine Zeitinformation basierend auf einer internen Taktung des Empfängers handeln. Wird der Eintreffzeitpunkt zur Synchronisation des Empfängers verwendet, so kann es auch ausreichend sein, lediglich ein Triggersignal bereitzustellen, auf das sich der Empfänger aufsynchronisieren kann.

Alternativ kann die Verarbeitungseinrichtung 104 ausgebildet sein, um fortlaufend Wendepunkte auf der Korrelationsfolge 114 zu bestimmen. Wird zusätzlich ein Hauptmaximum in der Korrelationsfolge 114 ermittelt, so wird der zuletzt ermittelte Wendepunkt 114 zur Ermittlung des Eintreffzeitpunkts verwendet.

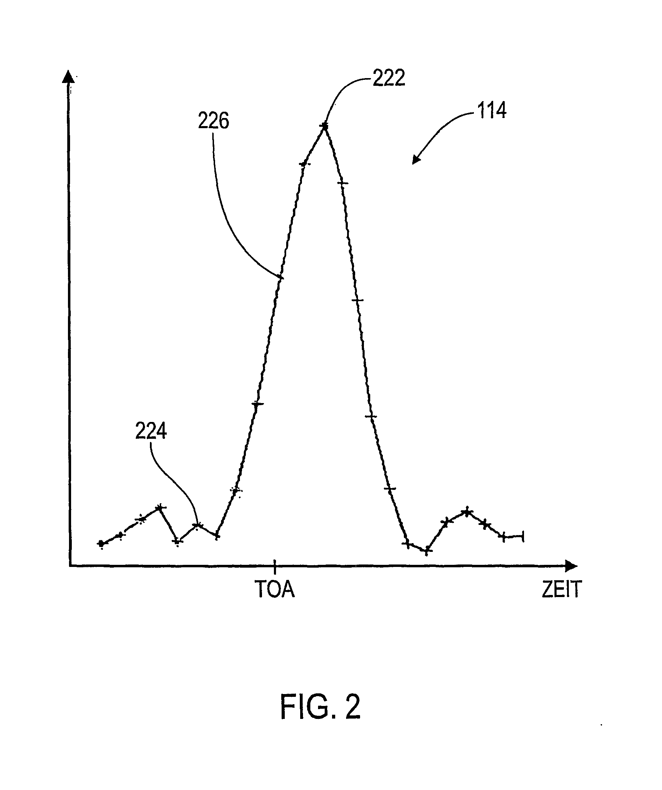

Fig. 2 zeigt eine graphische Darstellung einer Korrelationsfolge 114. Die in Fig. 2 gezeigte Korrelationsfolge 114 ist ein Ausschnitt aus der in Fig. 4 gezeigten Korrelationsfolge. Genauer gesagt zeigt Fig. 2 den ersten Korrelationspeak der in Fig. 4 gezeigten Korrelationsfolge. Die Korrelationsfolge 114 weist eine Vielzahl von Korrelationswerten auf, die in der in Fig. 1 gezeigten Korrelationseinrichtung berechnet wurden. Drei dieser Korrelationswerte sind durch Bezugszeichen gekennzeichnet. Der Korrelationswert 222 stellt das Hauptmaximum, der Korrelationswert 224 ein lokales Nebenmaximum und der Korrelationswert 226 einen Wendepunkt der Korrelationsfolge 114 dar. Die Korrelationswerte der Korrelationsfolge 114 sind über die Zeit aufgetragen. Der Korrelationswert 224 wurde zeitlich gesehen vor den Korrelationswerten 226, 222 in der Korrelationseinrichtung 102 berechnet. Die Korrelationsfolge 114 ist eine Korrelationsbetragsfolge, d. h. in vertikaler Richtung ist die Amplitude der Korrelationswerte aufgetragen.

Die Korrelationsfolge 114 weist zum Hauptmaximum 222 hin eine Spitzenform auf. Der Punkt 224 ist ein erstes Nebenmaximum vor dem Hauptmaximum 222. Der dem Nebenmaximum 224 nachfolgende Korrelationswert ist ein lokales Minimum vor dem Hauptmaximum 222. Zwischen dem Wendepunkt 226 und dem davor gelegenen Korrelationswert ist die Steigung der Korrelationsfolge maximal. Aus Fig. 2 ist ersichtlich, dass auch nach dem Hauptmaximum 222 ein Wendepunkt, ein Bereich einer maximalen Steigung, ein lokales Minimum sowie ein lokales Nebenmaximum angeordnet ist.

Gemäß diesem Ausführungsbeispiel wird zur Bestimmung eines Eintreffzeitpunkts einer Empfangsfolge in einem Empfänger nicht das Hauptmaximum 222 herangezogen, sondern ein Punkt bzw. ein Korrelationswert, der innerhalb eines Intervalls liegt, das um das Hauptmaximum 222 angeordnet ist. Gemäß diesem Ausführungsbeispiel ist das Intervall einerseits durch das lokale Nebenmaximum 224 und andererseits durch das Hauptmaximum 222 begrenzt. Welcher Punkt innerhalb dieses Intervalls zur Bestimmung des Eintreffzeitpunkts am besten geeignet ist, d. h. dessen Position auf der Zeitachse am unempfindlichsten gegenüber Mehrwegeausbreitung und Rauschen ist, hängt von der verwendeten Sendefolge und dem Übertragungssystem ab. Beispielsweise könnte das erste lokale Nebenmaximum 224, das erste lokale Minimum, der Bereich der größten Steigung (also ein Wendepunkt) oder der erste Wendepunkt vor dem Hauptmaximum 222 zur Bestimmung des Eintreffzeitpunkts herangezogen werden.

In diesem Ausführungsbeispiel wird der Wendepunkt 226 als geeigneter Punkt zur Bestimmung des Eintreffzeitpunkts ermittelt. Dazu wird auf der Korrelationsbetragssequenz 114 der Wendepunkt vor dem Hauptmaximum im betrachteten Fenster oder Intervall gesucht. Das heißt, es wird zuerst das Hauptmaximum 222 bestimmt und dann wird auf der Korrelationsbetragskurve 114 zeitlich zurückgeschritten, bis der erste Wendepunkt 226 gefunden wird.

Für die Suche des Wendepunkts wird die erste und die zweite Ableitung der Korrelationsbetragsfunktion 114 benötigt. Da diese Funktion nur abgetastet vorliegt, d. h. die Korrelationsfolge 114 besteht nur aus den in Fig. 2 durch Kreuze gekennzeichneten Korrelationswerten, können die Ableitungen in der in Fig. 1 gezeigten Verarbeitungseinrichtung 104 nur näherungsweise und ebenfalls nur abgetastet berechnet werden. Die Lage des Wendepunkts ist also zunächst nur im Abtastraster detektierbar.

Alternativ könnte das Intervall auch nach dem Hauptmaximum 222 aufgespannt sein.

Die in Fig. 1 gezeigte Empfangsfolge 112 und die Sendefolge 113 weisen komplexwertige Werte auf. Eine Steigerung der Genauigkeit bei der Schätzung des Eintreffzeitpunkts kann erreicht werden, indem die in der Korrelationseinrichtung 102 berechneten komplexen Korrelationswerte upgesampelt werden. Dies kann durch Zero-Insertion und Tiefpassfilterung erfolgen. Anschließend wird der Betrag der upgesampelten komplexen Korrelationswerte berechnet und mit diesem weiter gearbeitet.

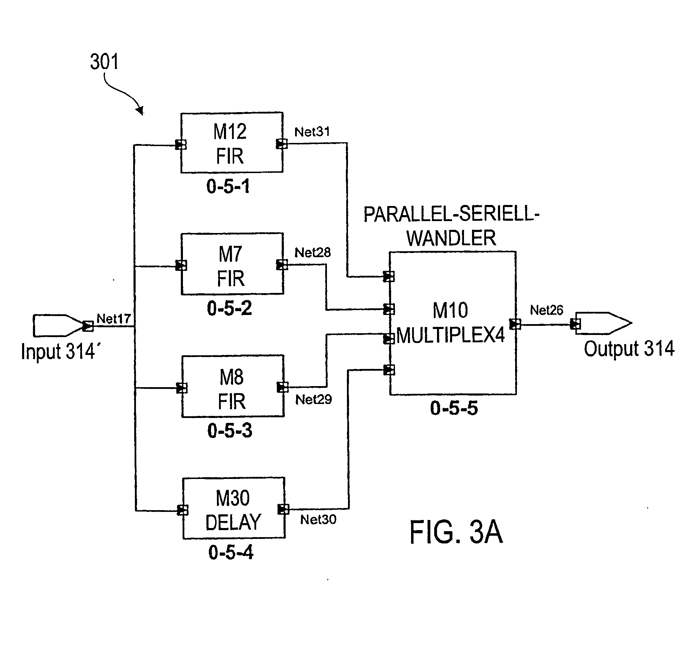

Fig. 3a zeigt ein Ausführungsbeispiel einer Einrichtung zum Überabtasten der Korrelationsfolge, in Form einer konkreten Realisierung als Upsampling-Filter in Polyphasenstruktur. An die Überabtasteinrichtung wird als Input eine Korrelationsfolge 314' bereitgestellt, die als Output 314 in Form einer überabgetasteten Korrelationsfolge ausgegeben wird. Das in Fig. 3a gezeigte Upsampling-Filter weist drei parallel angeordnete FIR-Filter auf, die als Blöcke 0-5-1, 0-5-2, 0-5-3 bezeichnet sind. Den FIR-Filtern ist eine Verzögerungseinrichtung 0-5-4 parallel geschaltet. Die Eingänge der FIR-Filter sowie der Verzögerungseinrichtung sind mit dem Input 314' verbunden. Die Ausgänge der FIR-Filter sowie der Verzögerungseinrichtung sind mit einem Parallel-Seriell-Wandler 0-5-5 verbunden, der die überabgetastete Korrelationsfolge 314 aus den Ausgabewerten der FIR-Filter sowie der Verzögerungseinrichtung ermittelt.

Mit dem in Fig. 3a gezeigten Upsampling-Filter wird eine Möglichkeit geschaffen, die Positionsbestimmung der Korrelationsmaxima bzw. der zur Bestimmung des Eintreffzeitpunkts verwendeten Punkte der Korrelationsfolge zu verfeinern. Dazu wird das bei einer Samplerate B_Clock_16 erhaltene Korrelationssignal 314' durch Einfügen von (r-1) Nullen und anschließender Tiefpassfilterung auf einen Sampletakt von B_Clock_16*R gebracht. R kennzeichnet dabei den Überabtastfaktor. Aus Implementierungsgründen kann es von Vorteil sein, das Upsampling-Filter entweder wegzulassen, einen anderen Überabtastfaktor zu wählen oder die Anzahl der Filterkoeffizienten zu verringern. In diesem Ausführungsbeispiel wird ein Upsampling-Filter gewählt. Damit wird der Überabtastfaktor zu R = 4 gesetzt.

Bei der Implementierung des Filters sind Vereinfachungen möglich. Zum einen ist eine Polyphasen-Implementierung möglich. Die Eingangssequenz 314' hat nur an jeder vierten Stelle einen von Null verschiedenen Wert. Stellt man sich das FIR-Filter in einer "Taped-Delay-Line"-Struktur vor, so wird für die Berechnung jedes Ausgangswertes nur L/R Koeffizienten verwendet. L bezeichnet dabei die FIR-Filterlänge. Die verwendeten Koeffizienten wiederholen sich periodisch nach genau R Ausgangswerten. Daher lässt sich ein solches FIR-Filter in R Teilfilter der Länge L/R zerlegen. Die Ausgänge der entsprechenden Filter müssen dann lediglich in der richtigen Reihenfolge zu einem höherratigen Datenstrom gemultiplext werden.

Eine weitere Vereinfachung ergibt sich durch die Symmetrie der Teilfilter. Die Realisierung des FIR-Filters führt zu einer regelmäßigen Koeffizientenstruktur für Teilfilter 0-5-2, d. h. gerade Länge und achsensymmetrisch, und zu einer Reduktion von einem vierten Teilfilter auf das Verzögerungselement 0-5-4.

Der Eingangsdatenstrom 314' wird parallel auf vier Filter gegeben. Das heißt, nach Reduktion des vierten Teilfilters auf ein Delay-Element 0-5-4 und drei Filter 0-5-1, 0-5-2, 0-5-3 gegeben, und nach dem Filtern werden die vier parallelen Datenströme net31, net28, net29, net38 im Block 0-5-5, der den Parallel-Seriell-Wandler darstellt, zu einem seriellen Datenstrom mit der Datenrate B_Clock_4 gewandelt.

Durch diese Parallelisierung am Eingang erreicht man eine Veränderung der Portraten zwischen Input 314' und Output 314 um den Faktor 4.

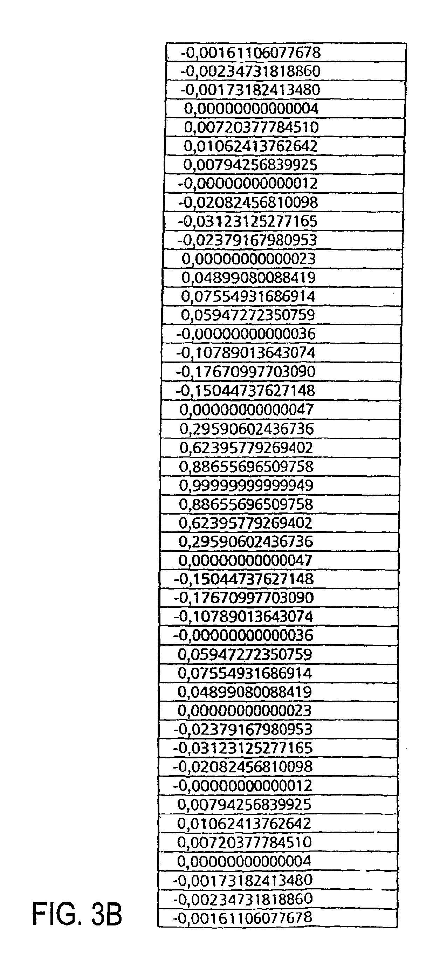

Fig. 3b zeigt die Filterkoeffizienten des in Fig. 3a gezeigten Filters. Daraus werden die Teilfilter erzeugt. Da der zweite Teilfilter eine achsensymmetrische Struktur ungerader Länge hat, könnte man dieses Filter weiter verkürzen, d. h. zumindest die Zahl der Multiplikationen halbieren.

Da der Teilfilter 4 nur an der Stelle 6 mit einer 1 besetzt ist, kann dieser Block durch das Delay-Element 0-5-4 mit einem Delay = 5 ersetzt werden. Dies führt zu einer Verschiebung des Eingangs um fünf Elemente.

Die Korrelation der in Fig. 1 gezeigten Empfangsfolge 112 und der Sendefolge 114 kann mittels Teilkorrelationen erfolgen. Dies ist insbesondere dann sinnvoll, wenn ein Frequenzversatz zwischen Empfangsfolge und Sendefolge vorliegt, der zu einer Auslöschung des Korrelationswertes führen könnte.

Um die Lage des Punktes, basierend auf dem der Eintreffzeitpunkt bestimmt werden soll, hochgenau bestimmen zu können, kann die in Fig. 1 gezeigte Verarbeitungseinrichtung 104 zusätzlich eine Interpolationseinrichtung aufweisen, die eine Interpolation zwischen den in Fig. 2 gezeigten Abtastwerten der Korrelationsfolge 114 vornimmt. Die Interpolation kann beispielsweise eine lineare Interpolation sein. Die Interpolation kann für die gesamte Korrelationsfolge durchgeführt werden. In dem in Fig. 2 beschriebenen Ausführungsbeispiel, bei dem basierend auf dem Wendepunkt der Eintreffzeitpunkt bestimmt wird, kann auch eine Interpolation nur zwischen Zeitpunkten um den Wendepunkt herum vorgenommen werden. Aus dieser sehr fein aufgelösten Schätzung der Wendepunktposition kann schließlich der Eintreffzeitpunkt hochgenau bestimmt werden.

Das erfindungsgemäße Verfahren kann als Matlab-Funktion realisiert werden. Gemäß einem Ausführungsbeispiel wird von einem Empfänger eine Barke beaconno empfangen. In einem Subsample-Bereich wird der erste Peak im Betrag der Korrelationswerte corrvals der Korrelationsfolge gesucht. Die Korrelationswerte werden als komplexe Werte und nicht als deren Betrag übergeben. Der Algorithmus des Ausführungsbeispiels arbeitet achtfach überabgetastet und mit einem Early-Late-Korrelator auf der Ableitung der Korrelationsbeträge, so dass der Zeitpunkt des steilsten Anstiegs oder Wendepunkts des ersten Peaks sehr genau bestimmt werden kann.

Gemäß diesem Ausführungsbeispiel wird die Position des ersten Peaks ausgegeben, wenn kein Eintreffzeitpunkt aus dem Wendepunkt bestimmt werden kann. Ferner kann ein Synclos-TOA-Datensatz erzeugt werden. Es wird die normierte erste Ableitung der idealen T-Burst-Autokorrelierten im Wendepunkt normiert auf den Betrag im Wendepunkt ermittelt. Ferner wird ein Upsampling der Korrelationsbetragsfunktion durchgeführt. Es wird eine Upsampled-Version von corrvals durch Auffüllen mit sieben Nullen nach jedem Wert erzeugt. Dies bedeutet, dass jeder achte Wert ein Korrelationswert ist. Bei einer anschließenden Tiefpassfilterung werden alle Spectralimages des upgesampelten Signals entfernt. Ein Interpolationsfilter ist dabei derart beschaffen, dass die Korrelationswerte im Sampleraster wirklich nur interpoliert und nicht verstärkt werden. Das heißt, der Koeffizienten 1 ist genau in der Mitte und im Abstand 8 sind jeweils nur Nullen. Gemäß diesem Ausführungsbeispiel interessiert nur der Betrag der upgesampelten Korrelationswerte.

Die erste Ableitung des upgesampelten Korrelationsbetrags enthält jetzt die Ableitung zwischen den Subsamples mit Indizes i und i+1, also praktisch die Ableitung im Index i+0,5. Die zweite Ableitung wird ermittelt, wobei ein Dummy-Wert 0 vorausgestellt wird, damit die Indizes mit denen von den Subsamples übereinstimmen. Zur TOA-Bestimmung, d. h. der Bestimmung des Eintreffzeitpunkts, wird die Position des Wendepunkts ermittelt. Dazu wird der Hauptpeak gesucht, der aber nicht der erste Pfad sein muss. Die ungefähre Position des ersten Peaks wird da gesucht, wo zum ersten Mal eine definierte Schwelle t_peakthresh bezüglich einem maximalen Betrag erreicht wird. Der erste Pfad darf gemäß diesem Ausführungsbeispiel deshalb nicht mehr als 10*log10(t_peakthresh) dB unter dem Hauptpfad liegen.

Gegebenenfalls darf der erste Pfad noch weniger unter dem Hauptpfad liegen, wenn nicht der Hauptrippel, sondern ein linker Nebenrippel einer Autokorrelierten gefunden werden soll. Soll genau der Hauptrippel gefunden werden, so kann man durch Betrachten der Autokorrelierten sehen, um welchen Faktor der erste Nebenrippel unter dem Maximum liegt, damit man mit dem Faktor t_peakthresh auf der sicheren Seite liegt und nicht in den Nebenrippel reinläuft.

Die Korrelationsbetragsfunktion hat vor jedem Peak einen Wendepunkt, d. h. einen Punkt mit maximaler erster Ableitung. Im Folgenden wird der Index links neben dem linken Wendepunkt, d. h. das letzte Element mit einer positiven zweiten Ableitung, gesucht. Nach der Ermittlung des Index des Punktes unmittelbar links von dem Wendepunkt wird durch lineare Interpolation die genaue Lage des Wendepunkts berechnet. Bei der Bestimmung der Time-Of-Arrival wird die Gruppenlaufzeit des Filters abgezogen. Wird kein Wendepunkt gefunden, so wird, obwohl nicht wirklich eine Time-Of-Arrival bestimmt werden konnte, die Position des ersten Peaks genommen, damit für den nächsten Burst das Fenster in die richtige Richtung weiterwandert.

Ferner wird ein Qualitätsmaß in Form einer Abweichung von der Idealkurve ermittelt. Die Abweichung von der Idealkurve ist ein geeignetes Qualitätsmaß auch für verrauschten Ein-Wege-Empfang, aber in erster Linie für Mehrwegeempfang, wenn die folgenden Pfade nicht viel schwächer als der erste sind. Dazu werden die Indizes der upgesampelten Korrelationsbeträge links und rechts des Wendepunkts bestimmt. Eine lineare Interpolation des Korrelationsbetrags wird genau im Wendepunkt bestimmt. Ferner werden die Indizes der Ableitungspunkte links und rechts des Wendepunkts ermittelt. Hier wird berücksichtigt, dass die Indizes der ersten Ableitung gegenüber den Indizes der Korrelationsbeträge um 0,5 verschoben sind. Nach der linearen Interpolation der Ableitung genau im Wendepunkt wird die normierte Ableitung im Wendepunkt ermittelt. Das Qualitätsmaß ist nun das Log-Ratio der tatsächlichen normierten Steigung im Wendepunkt zu der idealen normierten Steigung. Wurde kein Wendepunkt gefunden, so macht das Upsampling keinen Sinn. Also wird ein extrem schlechter Qualitätswert generiert. In der Implementierung wird der kleinste darstellbare Wert verwendet.

Fig. 4 zeigt ein Blockschaltbild eines Empfängers mit einer Vorrichtung zum Bestimmen eines Eintreffzeitpunkts einer Empfangsfolge in den Empfänger gemäß einem Ausführungsbeispiel der vorliegenden Erfindung. Die Vorrichtung weist eine Korrelationseinrichtung 102, eine Verarbeitungseinrichtung 104 und eine Upsampling-Einrichtung 301 auf. Ein Mischer 430 gibt ein ins komplexe Basisband gemischte Empfangssignal 412 in einem Sample-Takt B_Clock an einen Filter 431 weiter. Der Filter 431 ist dem Mischer 430 nachgeschaltet. Ein von dem Filter 431 generiertes Empfangssignal, das die in Fig. 1 gezeigte Empfangsfolge 112 aufweist, wird in dem Korrelationsblock 102 mit einer bekannten Signalfolge korreliert. Der Korrelationsblock 102 ist ausgebildet, um fortlaufend Korrelationsbetragswerte bereitzustellen, aus denen nachfolgend der Eintreffzeitpunkt der Empfangsfolge ermittelt wird. Die Korrelationsbetragswerte können in dem nachfolgenden Upsample-Block 301 upgesampelt werden. In der nachfolgenden Verarbeitungseinrichtung 104 wird der Wendepunkt der upgesampelten Korrelationsfolge ermittelt und der Eintreffzeitpunkt in Form des Triggersignals 116 ausgegeben.

Obwohl in den vorangegangenen Ausführungsbeispielen auf ein digitales Kommunikationssystem Bezug genommen wurde, kann der erfindungsgemäße Ansatz zur Bestimmung eines Eintreffzeitpunkts einer beliebigen Folge von Daten in einer Einrichtung genutzt werden. Aus der Empfangsfolge kann durch Kreuzkorrelation, Autokorrelation oder anderen Korrelationsarten eine Korrelationsfolge ermittelt werden, aus der wiederum der Eintreffzeitpunkt ermittelt wird.

Abhängig von den Gegebenheiten kann das erfindungsgemäße Verfahren zum Bestimmen eines Eintreffzeitpunkts in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogramm auf einem Computer abläuft.

**Patentansprüche**

1. Vorrichtung zum Bestimmen eines Eintreffzeitpunkts einer Empfangsfolge in einem Empfänger mit folgenden Merkmalen:

   einer Korrelationseinrichtung (102), die ausgebildet ist, um eine Korrelationsfolge (114) aus einer Korrelation der Empfangsfolge (112) mit einer Sendefolge (113) zu ermitteln, wobei die Korrelationsfolge eine Spitzenform mit einem Hauptmaximum (222) aufweist;
   einer Detektionseinrichtung, die ausgebildet ist, um das Hauptmaximum (222) zu bestimmen; und
   einer Verarbeitungseinrichtung (104), die ausgebildet ist, um als Folge einer Bestimmung des Hauptmaximums, eine Position eines Punktes (226) der Korrelationsfolge zu ermitteln, wobei der Punkt ein Wendepunkt, ein Nebenmaximum, ein lokales Minimum oder ein Punkt maximaler Steigung in der Korrelationsfolge (114) ist und in einem Intervall liegt, das an das Hauptmaximum angrenzt, und wobei die Verarbeitungseinrichtung ausgebildet ist, um den Eintreffzeitpunkt aus der Position des Punktes zu bestimmen.

2. Vorrichtung gemäß Anspruch 1, wobei das Intervall auf der einen Seite von dem Hauptmaximum (222) begrenzt ist, und wobei das Hauptmaximum nicht Teil des Intervalls ist, aus dem der Punkt ermittelt wird.

3. Vorrichtung gemäß einem der Ansprüche 1 bis 2, wobei die Vorrichtung ausgebildet ist, um fortlaufend Auswahlpunkte aus der Korrelationsfolge (114) zu bestimmen, wobei Auswahlpunkte Wendepunkte, Nebenmaxima, lokale Minima oder Punkte maximaler Steigung in der Korrelationsfolge sind, und ansprechend auf ein Ermitteln des Hauptmaximums einen Auswahlpunkt als den Punkt (226) zu ermitteln, aus dessen Position der Eintreffzeitpunkt bestimmt wird.

4. Vorrichtung gemäß einem der Ansprüche 1 bis 3, wobei die Verarbeitungseinrichtung (104) eine Interpolationseinrichtung aufweist, die ausgebildet ist, um die Korrelationsfolge (114) zu interpolieren und eine interpolierte Korrelationsfolge bereitzustellen, und wobei die Verarbeitungseinrichtung ausgebildet ist, um den Punkt (226) aus der interpolierten Korrelationsfolge zu ermitteln.

5. Vorrichtung gemäß einem der Ansprüche 1 bis 4, wobei die Vorrichtung ausgebildet ist, um ansprechend auf eine Ermittlung des Punktes (226) ein Triggersignal (116) mit einer Information über den Eintreffzeitpunkt bereitzustellen.

6. Vorrichtung gemäß einem der Ansprüche 1 bis 5, wobei die Vorrichtung ausgebildet ist, um den Eintreffzeitpunkt in Abhängigkeit von dem Hauptmaximum (222) zu bestimmen, wenn in dem Intervall kein Punkt (226) bestimmbar ist.

7. Vorrichtung gemäß einem der Ansprüche 1 bis 6, wobei die Korrelationsfolge wenigstens ein lokales Nebenmaximum (124) aufweist; und
   wobei das Intervall auf der einen Seite durch das lokale Nebenmaximum und auf der anderen Seite durch das Hauptmaximum begrenzt ist.

8. Vorrichtung gemäß einem der Ansprüche 1 bis 7, wobei der Punkt vor dem Hauptmaximum gelegen ist.

9. Verfahren zum Bestimmen eines Eintreffzeitpunkts einer Empfangsfolge in einem Empfänger mit folgenden Schritten:

   Ermitteln einer Korrelationsfolge (114) aus einer Korrelation der Empfangsfolge (112) mit einer Sendefolge (113), wobei die Korrelationsfolge eine Spitzenform mit einem Hauptmaximum (222) aufweist;
   Bestimmen des Hauptmaximums; und
   Ermitteln einer Position eines Punktes (226) der Korrelationsfolge als Folge der Bestimmung des Hauptmaximums, wobei der Punkt ein Wendepunkt, ein Nebenmaximum, ein lokales Minimum oder ein Punkt maximaler Steigung in der Korrelationsfolge (114) ist und in einem Intervall liegt, das an das Hauptmaximum angrenzt, und Bestimmen des Eintreffzeitpunkts aus der Position des Punktes.

10. Computerprogramm mit einem Programmcode zur Durchführung des Verfahrens gemäß Anspruch 9, wenn das Computerprogramm auf einem Computer abläuft.

**Claims**

1. Device for determining a time of arrival of a receive sequence in a receiver, comprising the following features:

   a correlator (102) which is designed to determine a correlation sequence (114) from a correlation of the receive sequence (112) with a transmit sequence (113), the correlation sequence having a peak shape with a main maximum (222);
   a detector which is designed to determine the main maximum (222); and
   a processor (104) which is designed to determine a position of a point (226) of the correlation sequence as a result of a determination of the main maximum, where the point is a reversal point, a secondary maximum, a local minimum or a point of maximum gradient in the correlation sequence (114) and lies in an interval which is adjacent to the main maximum, and where the processor is designed to determine the time of arrival from the position of the point.

2. Device according to Claim 1, wherein the interval is bounded by the main maximum (222) on one side and wherein the main maximum is not part of the interval from which the point is determined.

3. Device according to one of Claims 1 to 2, wherein the device is designed to continuously determine selection points from the correlation sequence (114), selection points being reversal points, secondary maxima, local minima or points of maximum gradient in the correlation sequence, and to determine, in response to a determination of the main maximum, a selection point as the point (226) from whose position the time of arrival is determined.

4. Device according to one of Claims 1 to 3, wherein the processor (104) has an interpolator which is designed to interpolate the correlation sequence (114) and provide an interpolated correlation sequence, and wherein the processor is designed to determine the point (226) from the interpolated correlation sequence.

5. Device according to one of Claims 1 to 4, wherein the device is designed to provide, in response to a determination of the point (226), a trigger signal (116) having information about the time of arrival.

6. Device according to one of Claims 1 to 5, wherein the device is designed to determine the time of arrival in dependence on the main maximum (222) when no point (226) is determinable in the interval.

7. Device according to one of Claims 1 to 6, wherein the correlation sequence has at least one local secondary maximum (124); and
wherein the interval is bounded on one side by the local secondary maximum and on the other side by the main maximum.

8. Device according to one of Claims 1 to 7, wherein the point is located before the main maximum.

9. Method for determining a time of arrival of a receive sequence in a receiver, comprising the following steps:

   determining a correlation sequence (114) from a correlation of the receive sequence (112) with a transmit sequence (113), the correlation sequence having a peak shape with a main maximum (222);
   determining the main maximum; and
   determining a position of a point (226) of the correlation sequence as a result of the determination of the main maximum, where the point is a reversal point, a secondary maximum, a local minimum or a point of maximum gradient in the correlation sequence (114) and lies in an interval which is adjacent to the main maximum, and determining the time of arrival from the position of the point.

10. Computer program having a program code for carrying out the method according to Claim 9 when the computer program runs on a computer.

**Revendications**

1. Dispositif pour déterminer un moment d'arrivée d'une séquence de réception dans un récepteur, présentant les caractéristiques suivantes :

   un dispositif de corrélation (102), qui est conçu pour déterminer une séquence de corrélation (114) à partir d'une corrélation de la séquence de réception (112) avec une séquence d'émission (113), la séquence de corrélation présentant une forme de pointe avec un maximum principal (222) ;
   un dispositif de détection, qui est conçu pour déterminer le maximum principal (222) ; et
   un dispositif de traitement (104), qui est conçu pour déterminer, comme conséquence d'une détermination du maximum principal, une position d'un point (226) de la séquence de corrélation, le point étant un point d'inversion, un maximum secondaire, un minimum local ou un point de pente maximale dans la séquence de corrélation (114) et se situant dans un intervalle qui est contigu au maximum principal, et le dispositif de traitement étant conçu pour déterminer le moment d'arrivée à partir de la position du point.

2. Dispositif selon la revendication 1, l'intervalle étant limité d'un côté par le maximum principal (222), et le maximum principal ne faisant pas partie de l'intervalle à partir duquel le point est déterminé.

3. Dispositif selon l'une des revendications 1 à 2, le dispositif étant conçu pour déterminer de façon continue des points de sélection à partir de la séquence de corrélation (114), des points de sélection étant des points d'inversion, des maxima secondaires, des minima locaux ou des points de pointe maximale dans la séquence de corrélation, et pour déterminer en réaction à une détermination du maximum principal un point de sélection en tant que point (226), à partir de la position du moment d'arrivée est déterminé.

4. Dispositif selon l'une quelconque des revendications 1 à 3, le dispositif de traitement (104) présentant un dispositif d'interpolation, qui est conçu pour interpoler la séquence de corrélation (114) et mettre à disposition une séquence de corrélation interpolée, et le dispositif de traitement étant conçu pour déterminer le point (226) à partir de la séquence de corrélation interpolée.

5. Dispositif selon l'une quelconque des revendications 1 à 4, le dispositif étant conçu pour mettre à disposition en réaction à une détermination du point (226) un signal déclencheur (116) avec une information sur le moment d'arrivée.

6. Dispositif selon l'une quelconque des revendications 1 à 5, le dispositif étant conçu pour déterminer le moment d'arrivée en fonction du maximum principal (222) lorsqu'aucun point (226) ne peut être déterminé dans l'intervalle.

7. Dispositif selon l'une quelconque des revendications 1 à 6, la séquence de corrélation présentant au moins un maximum secondaire (124) local ; et l'intervalle étant limité d'un côté par le maximum secondaire local et de l'autre côté par le maximum principal.

8. Dispositif selon l'une quelconque des revendications 1 à 7, le point étant placé avant le maximum principal.

9. Procédé pour déterminer un moment d'arrivée d'une séquence de réception dans un récepteur, présentant les étapes suivantes de :

détermination d'une séquence de corrélation (114) à partir d'une corrélation de la séquence de réception (112) avec une séquence d'émission (113), la séquence de corrélation présentant une forme de pointe avec un maximum principal (222) ;
détermination du maximum principal ; et
détermination d'une position d'un point (226) de la séquence de corrélation comme conséquence de la détermination du maximum principal, le point étant un point d'inversion, un maximum secondaire, un minimum local, ou un point de pente maximale dans la séquence de corrélation (114) et étant situé dans un intervalle qui est contigu au maximum principal, et détermination du moment d'arrivée à partir de la position du point.

10. Programme informatique avec un code de programme pour la mise en oeuvre du procédé selon la revendication 9, lorsque le programme informatique se déroule sur un ordinateur.

EMPFANGS-FOLGE 112

102 KORRELATIONS-EINRICHTUNG

SENDEFOLGE 113

KORRELATIONS-FOLGE 114

104 VERARBEITUNGS-EINRICHTUNG

EINTREFF-ZEITPUNKT 116

FIG. 1

FIG. 2

301

M12
FIR

0-5-1

Net31

PARALLEL-SERIELL-
WANDLER

M7
FIR

0-5-2

Net28

Input 314'

Net17

M10
MULTIPLEX4

0-5-5

Net26

Output 314

M8
FIR

0-5-3

Net29

M30
DELAY

0-5-4

Net30

FIG. 3A

| |
|---|
| -0,00161106077678 |
| -0,00234731818860 |
| -0,00173182413480 |
| 0,00000000000004 |
| 0,00720377784510 |
| 0,01062413762642 |
| 0,00794256839925 |
| -0,00000000000012 |
| -0,02082456810098 |
| -0,03123125277165 |
| -0,02379167980953 |
| 0,00000000000023 |
| 0,04899080088419 |
| 0,07554931686914 |
| 0,05947272350759 |
| -0,00000000000036 |
| -0,10789013643074 |
| -0,17670997703090 |
| -0,15044737627148 |
| 0,00000000000047 |
| 0,29590602436736 |
| 0,62395779269402 |
| 0,88655696509758 |
| 0,99999999999949 |
| 0,88655696509758 |
| 0,62395779269402 |
| 0,29590602436736 |
| 0,00000000000047 |
| -0,15044737627148 |
| -0,17670997703090 |
| -0,10789013643074 |
| -0,00000000000036 |
| 0,05947272350759 |
| 0,07554931686914 |
| 0,04899080088419 |
| 0,00000000000023 |
| -0,02379167980953 |
| -0,03123125277165 |
| -0,02082456810098 |
| -0,00000000000012 |
| 0,00794256839925 |
| 0,01062413762642 |
| 0,00720377784510 |
| 0,00000000000004 |
| -0,00173182413480 |
| -0,00234731818860 |
| -0,00161106077678 |

FIG. 3B

TRIGGER-SIGNAL 116

104 VERARBEITUNGS-EINRICHTUNG

301 UP-SAMPLING

102 KORRELATION

431 FILTER

430 MISCHER

BASISBAND-SIGNAL 412

FIG. 4

FIG. 5
(STAND DER TECHNIK)

**EP 1 847 028 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1089452 A1
- EP 0933882 A2
- US 20030215035 A1
- US 20040203871 A1
- WO 03001699 A1